(19) Europäisches Patentamt
European Patent Office
Office européen des brevets

(11) **EP 2 054 853 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(21) Anmeldenummer: **07801818.1**

(22) Anmeldetag: **22.08.2007**

(51) Int Cl.:
**G06T 5/50** *(2006.01)*     **G06T 3/40** *(2006.01)*

(86) Internationale Anmeldenummer:
**PCT/EP2007/007389**

(87) Internationale Veröffentlichungsnummer:
**WO 2008/022780 (28.02.2008 Gazette 2008/09)**

(54) **VORRICHTUNG UND VERFAHREN ZUR REDUZIERUNG VON ÜBERGANGSARTEFAKTEN IN EINEM GESAMTBILD, DAS SICH AUS TEILBILDERN ZUSAMMENSETZT**

APPARATUS AND METHOD FOR REDUCING TRANSITION ARTEFACTS IN AN OVERALL IMAGE COMPOSED OF PARTIAL IMAGES

DISPOSITIF ET PROCÉDÉ DE RÉDUCTION DES ARTEFACTS DE TRANSITION DANS UNE IMAGE COMPLÈTE QUI SE COMPOSE D'IMAGES PARTIELLES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.08.2006 DE 102006039389**

(43) Veröffentlichungstag der Anmeldung:
**06.05.2009 Patentblatt 2009/19**

(73) Patentinhaber: **Fraunhofer-Gesellschaft zur Förderung der angewandten Forschung e.V.
80686 München (DE)**

(72) Erfinder:
- **KUBE, Matthias
  90762 Fuerth (DE)**
- **SCHOLZ, Olivier
  91096 Möhrendorf (DE)**
- **BEHRENDT, Rolf
  91077 Dormitz (DE)**

(74) Vertreter: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) Entgegenhaltungen:
**US-A1- 2004 057 633     US-A1- 2004 207 738**

- **SZELISKI RICHARD: "image Alignment and Stitching: A tutorial" INTERNET CITATION, [Online] 26. Januar 2005 (2005-01-26), XP002477627 Gefunden im Internet: URL:http://robots.stanford.edu/cs223b05/MSR-TR-2004-92-Jan26.pdf> [gefunden am 2008-04-22]**
- **ANAT LEVIN ET AL: "Seamless Image Stitching in the Gradient Domain" COMPUTER VISION - ECCV 2004; [LECTURE NOTES IN COMPUTER SCIENCE;;LNCS], SPRINGER-VERLAG, BERLIN/HEIDELBERG, Bd. 3024, 16. April 2004 (2004-04-16), Seiten 377-389, XP019005934 ISBN: 978-3-540-21981-1**
- **PELEG S: "Elimination of seams from photomosaics" COMPUTER GRAPHICS AND IMAGE PROCESSING USA, Bd. 16, Nr. 1, Mai 1981 (1981-05), Seiten 90-94, XP002492312 ISSN: 0146-664X**
- **KOREN I ET AL: "A self-correcting active pixel camera" PROCEEDINGS IEEE INTERNATIONAL SYMPOSIUM ON DEFECT AND FAULT TOLERANCE IN VLSI SYSTEMS IEEE COMPUT. SOC LOS ALAMITOS, CA, USA, 2000, Seiten 56-64, XP002492313 ISBN: 0-7695-0719-0**

**EP 2 054 853 B1**

**EP 2 054 853 B1**

**Beschreibung**

Die vorliegende Erfindung bezieht sich auf eine Vorrichtung und ein Verfahren zur Reduzierung von Übergangsartefakten in einem Gesamtbild, das sich aus Teilbildern zusammensetzt, deren Bildbereiche Überlappungsbereiche aufweisen, wie sie beispielsweise beim Einsatz von mehreren Kameras zur Ablichtung eines Bildbereiches, der über den Bildbereich einer einzelnen Kamera hinausgeht, vorkommen.

Das technische Einsatzgebiet der hier beschriebenen Erfindung ist vorzugsweise die Verarbeitung von Röntgenbilddaten, insbesondere in der industriellen Qualitätskontrolle an Produkten, die mittels Röntgenstrahlung durchgeführt wird. Ein wichtiger Anwendungsfall ist die Detektion von Lunkern, Porositäten oder anderen Fehlstellen in Gussteilen wie z. B. Aluminiumrädern. Da der Abbildungsbereich der Prüflinge in diesem Anwendungsgebiet oftmals sehr groß ist, lässt sich ein einzelner Prüfling nicht durch eine Einzelbildaufnahme überprüfen. Ferner weisen Röntgenbildaufnahmen prinzipbedingt ein Bildrauschen auf, was dazu führt, dass mehrere Einzelaufnahmen notwendig sind, um eine Mittelung der einzelnen Aufnahmen durchführen zu können und ein verwertbares Bild zu erhalten.

Um die Prüfzeit möglichst gering zu halten, verwendet man mehrere Kameras bzw. Röntgendetektoren, um aus mehreren Einzelaufnahmen ein Gesamtbild zusammenzusetzen. Die Einzelaufnahmen werden einer Vorverarbeitung unterworfen, insbesondere Röntgenbildaufnahmen für die Qualitätskontrolle von Produkten, die mittels Röntgendurchstrahlung oder Computertomographie durchgeführt wird. Zunehmend werden die zu prüfenden Objekte, d. h. die Prüflinge, größer in ihren Schirms in einer vorbestimmten Gesamtauflösung zu erzeugen. Die Bildverarbeitungseinrichtung nimmt dabei eine Korrektur der Einzelbilder hinsichtlich Ausrichtungsungenauigkeiten und/oder Parameterschwankungen vor, wobei für Korrekturzwecke eine Korrekturauflösung verwendet wird, die höher als die Gesamtauflösung ist, und wobei für die Korrektur für jede einzelne Kamera eine eigene Korrekturvorschrift verwendet wird. Es erfolgt also eine geometrische Korrektur der Einzelbilder, bevor sie zu einem Gesamtbild zusammengesetzt werden. Die geometrische Korrektur umfasst das Ausrichten, sowohl rotatorisch als auch translatorisch, der Einzelbilder. Nach erfolgter Korrektur wird das korrigierte Gesamtbild durch Kombination benachbarter Pixel auf die vorbestimmte Gesamtauflösung gebracht. Damit ermöglicht der Einsatz günstiger Einzelkameras eine effiziente, preisgünstige und artefaktarme Abbildung eines großformatigen Schirms. Problematisch sind die Überlappungsstellen der Einzelbilder, da diese insbesondere bei einer automatisierten Auswertung zu Fehldiagnosen bei der Prüfung führen können.

Ferner treten in der Praxis häufig fehlerbehaftete Bildpunkte in Teilbildern auf. Diese können zum einem auf Alterungserscheinungen der Kameras oder Detektoren zurückzuführen sein, zum anderen aber auch durch Hardwaredefekte hervorgerufen werden können. Fehlerbehaftete Bildpunkte führen häufig zu Artefakten in den Teilbildern bzw. Gesamtbildern. Diese Artefakte erschweren die automatisierte Auswertung der Bilddaten, da diese oftmals als Fehler in oder an einem Prüfling interpretiert werden.

Richard Szeliski, "Image Alignment and Stitching: A Tutorial", 26. Januar 2005, Technical Report, umfasst eine Einführung in die Bildverarbeitung, in der aus mehreren Teilbildern durch Ausrichtung und Zusammenfügen ein Gesamtbild erzeugt wird. Dabei werden mehrere Algorithmen vorgestellt, die das Zusammenfügen und Ausrichten der Teilbilder sowie das Überblenden in den Überlappungsbereichen ermöglichen.

Dabei werden beispielsweise Aspekte der Videostabilisierung, der Bildzusammenfassung und der Panoramafotografie berücksichtigt. Insbesondere werden Algorithmen vorgestellt, die ein Verwaschen, Vernebeln oder Verzerrungen in einem Überlappungs- oder Überblendbereich reduzieren.

Die US 2004/0057633 A1 offenbart ein Konzept zur Zusammenfassung von Einzelbildern, die in einem Mosaik zu einem Gesamtbild zusammengesetzt werden können. Dabei wird ein Konzept offenbart, das es beispielsweise erlaubt, kachelartige Landschaftsfotografien zu einem Gesamtbild zusammenzusetzen. Durch geeignete Überblendvorschriften werden die einzelnen Mosaike oder Kacheln überlagert und die Überlappungsbereiche übergeblendet.

In Anat Levin u. a., "Seamless Image Stitching in the Gradient Domain", ECCV 2004, LNCS 3024, Seiten 377 - 389, 2004, Springer-Verlag Berlin Heidelberg 2004, wird ein Konzept zur Zusammenfassung und Kombination mehrerer individueller Bilder zu einem zusammengesetzten Gesamtbild offenbart. Dabei wird die Qualität des zusammengesetzten Bildes basierend auf Vergleichen mit den Einzelbildern ermittelt, sowie durch eine Qualitätsbetrachtung des Übergangsbereichs. Der Übergangsbereich oder Überlappungsbereich zwischen den einzelnen Bildern wird hier als Gradientenbereich betrachtet, wobei in dem Gradientenbereich verschiedene Kostenfunktionen definiert werden, auf die hin die verschiedenen Algorithmen optimiert werden können. Bei der Optimierung werden sowohl photometrische als auch geometrische Unstimmigkeiten berücksichtigt.

Es ist die Aufgabe der vorliegenden Erfindung eine Vorrichtung und ein Verfahren zur effizienten Reduzierung von Übergangsartefakten in einem Gesamtbild zu schaffen.

Diese Aufgabe wird durch eine Vorrichtung nach Anspruch 1 und ein Verfahren nach Anspruch 13 gelöst.

Die vorliegende Erfindung weist den Vorteil auf, dass gemäß Ausführungsbeispielen der vorliegenden Erfindung, beispielsweise bei der Verschmelzung von Teilbildern, über eine aus mehreren Sensoren bestehenden Flächen- oder Zeilenkamera mit überlappenden Bildbereichen, Artefakte redu-Die vorliegende Erfindung schafft eine Vorrichtung und ein Verfahren zur Reduzierung von Übergangsartefakten in einem Gesamtbild zu schaffen, das sich aus Teilbildern zusammensetzt, deren Bildbereiche Überlappungsbereiche aufweisen.

Diese Aufgabe wird gelöst durch eine Vorrichtung zur Reduzierung von Übergangsartefakten in einem Gesamtbild, das sich aus Teilbildern zusammensetzt, deren Bildbereiche Überlappungsbereiche aufweisen. Die Vorrichtung weist eine Einrichtung zum Speichern von Bilddaten der Bildpunkte der Teilbilder auf und umfasst ferner eine Einrichtung zum Erzeugen des Gesamtbildes, basierend auf den Bilddaten der Teilbilder durch Überlagerung der Bilddaten der Bildpunkte in den Überlappungsbereichen gemäß einer Gewichtung, wobei die Gewichtung derart ausgebildet ist, dass ein Einfluss eines Bildpunktes eines Teilbildes, der in dem Gesamtbild ein Artefakt hervorrufen würde, in dem Gesamtbild reduziert ist.

Die vorliegende Erfindung schafft ferner ein Verfahren zur Reduzierung von Übergangsartefakten in einem Gesamtbild, das sich aus Teilbildern zusammensetzt, deren Bildbereiche Überlappungsbereiche aufweisen. Das erfindungsgemäße Verfahren umfasst einen Schritt des Speicherns der Bilddaten der Bildpunkte der Teilbilder und ferner einen Schritt des Erzeugens des Gesamtbildes, basierend auf den Bilddaten der Teilbilder durch Überlagerung der Bilddaten der Bildpunkte in den Überlappungsbereichen gemäß einer Gewichtung, wobei die Gewichtung derart ausgebildet ist, dass ein Einfluss eines Bildpunktes eines Teilbildes, der in dem Gesamtbild ein Artefakt hervorrufen würde, in dem Gesamtbild reduziert ist.

Die vorliegende Erfindung weist den Vorteil auf, dass gemäß Ausführungsbeispielen der vorliegenden Erfindung, beispielsweise bei der Verschmelzung von Teilbildern, über eine aus mehreren Sensoren bestehenden Flächen- oder Zeilenkamera mit überlappenden Bildbereichen, Artefakte reduziert werden. Beispielsweise werden unter Ausnutzung eines Überlappungsbereiches, Intensitäten einzelner Bildpunkte gewichtet aufaddiert, um somit ein Verschleifen bzw. ein langsameres Überblenden eines möglichen Grauwertsprungs zu erreichen. Ferner erlauben Ausführungsbeispiele der vorliegenden Erfindung über die Gewichtung Fehler in Teilbildern bei einer Zusammenfassung der Teilbilder zu einem Gesamtbild zu berücksichtigen. Dabei kann in Ausführungsbeispielen ein fehlerbehafteter Bildpunkt in einem Teilbild über eine entsprechende Gewichtung ausgeblendet werden, wohingegen ein korrekter Bildpunkt aus einem anderen Teilbild entsprechen eingeblendet werden kann.

Die Gewichtung oder auch Gewichtungsfunktionen können dabei beliebiger Gestalt sein, beispielsweise könne diese Sprünge bzw. Unstetigkeitsstellen für fehlerbehaftete Bildpunkte aufweisen. Da die Teilbilder in Ausführungsbeispielen vor der Zusammenfassung geometrische Korrekturen erfahren können, wie beispielsweise Rotationen oder Verschiebungen, können die Überlappungsbereiche der Teilbilder in dem Gesamtbild beliebige Gestalt annehmen, insbesondere wenn sich mehr als zwei Teilbilder überlappen. In Ausführungsbeispielen der vorliegenden Erfindung ist die Gewichtung an die jeweiligen Überlappungsbereiche angepasst, d.h. ein Überblenden kann unter Berücksichtigung der Form eines Überlappungsbereiches realisiert werden.

Ausführungsbeispiele der vorliegenden Erfindung reduzieren die in den Überlappungsbereichen entstehenden Artefakte erheblich, und tragen somit zu einer zuverlässigeren Qualitätskontrolle an großflächigen Prüflingen bei. Da bei der Qualitätskontrolle nunmehr erheblich weniger Fehldiagnosen auftreten, kann eine Produktion solcher Bauteile effizienter durchgeführt werden.

Ausführungsbeispiele der vorliegenden Erfindung werden nachfolgend bezugnehmend auf die beiliegenden Zeichnungen näher erläutert. Es zeigen:

Fig. 1    ein prinzipielles Blockschaltbild eines Ausführungsbeispiels der vorliegenden Erfindung;

Fig. 2a    zeigt beispielhaft den Überlappungsbereich zweier Teilbilder;

Fig. 2b    zeigt die Verläufe zweier beispielhafter Gewichtungsfunktionen;

Fig. 3a    zeigt beispielhaft je drei Pixel zweier sich überlappender Teilbilder, die genau gegeneinander ausgerichtet sind;

Fig. 3b    zeigt beispielhaft je drei Pixel zweier Teilbilder, die nicht exakt gegeneinander ausgerichtet sind; und

Fig. 3c    zeigt je vier Pixel zweier sich überlappender Teilbilder zur generellen Verdeutlichung der Überlappung.

Fig. 4    zeigt ein Ausführungsbeispiel zweier nichtlinearer Gewichtungsfunktionen.

Fig. 5    zeigt ein weiteres Ausführungsbeispiel zweier nicht-linearer Gewichtungsfunktionen.

Fig. 6    zeigt ein weiteres Ausführungsbeispiel zweier nicht-linearer Gewichtungsfunktionen.

Fig. 7a    zeigt ein Ausführungsbeispiel eines nichtrechteckigen Überlappungsbereiches.

Fig. 7b    zeigt ein weiteres Ausführungsbeispiel eines nicht-rechteckigen Überlappungsbereiches.

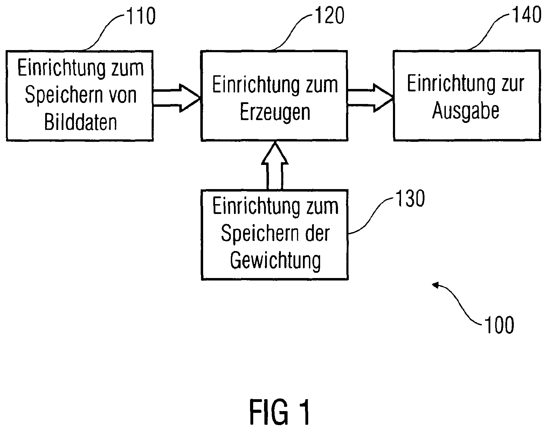

In Fig. 1 ist ein prinzipielles Blockschaltbild eines Ausführungsbeispiels einer erfindungsgemäßen Vorrichtung 100 dargestellt. Die Vorrichtung 100 zur Reduzierung von Übergangsartefakten in einem Gesamtbild, das sich aus Teilbildern zusammensetzt, deren Bildbereiche Überlappungsbereiche aufweisen, weist eine Einrichtung 110 zum Speichern von Bilddaten der Bildpunkte der Teilbilder auf. Die Vorrichtung 100 umfasst ferner eine Einrichtung zum Erzeugen des Gesamtbildes, basierend auf den Bilddaten der Teilbilder durch Überlagerung der Bilddaten der Bildpunkte in den Überlappungsbereichen gemäß einer Gewichtung, wobei die Gewichtung derart ausgebildet ist, dass ein Einfluss eines Bildpunktes eines Teilbildes, der in dem Gesamtbild ein Artefakt hervorrufen würde, in dem Gesamtbild reduziert ist. Die Einrichtung 110 zum Speichern ist mit der Einrichtung 120 zum Erzeugen derart gekoppelt, dass die Einrichtung 110 zum Speichern die gespeicherten Bilddaten zur Verfügung stellen kann. Die Teilbilder können dabei Überlappungsbereiche aufweisen, die nicht rechteckförmig sind.

Optional kann die Vorrichtung 100 ferner eine Einrichtung 130 zum Speichern der Gewichtung umfassen. Ebenfalls optional kann die Vorrichtung 110 zusätzlich eine Einrichtung zur Ausgabe 140 des Gesamtbildes aufweisen. Die Einrichtung zur Ausgabe 140 kann beispielsweise durch einen Ausgangsspeicher oder eine Datenausgabe implementiert sein. Die Einrichtung zum Speichern 130 ist derart mit der Einrichtung 120 zum Erzeugen des Gesamtbildes gekoppelt, dass sie Daten der Gewichtung zur Verfügung stellen kann. Die Einrichtung 120 zum Erzeugen des Gesamtbildes ist in einem Ausführungsbeispiel der vorliegenden Erfindung wiederum mit der Einrichtung 140 zur Ausgabe derart gekoppelt, dass sie die Bilddaten des Gesamtbildes übermitteln kann.

Die Einrichtung 110 zum Speichern von Bilddaten kann beispielsweise durch einen Speicher implementiert sein, der einem Array von Kameras nachgeschaltet ist und die Einzelbilder abspeichert. Hinsichtlich der erfindungsgemäßen Vorrichtung 100 fungiert die Einrichtung 110 zum Speichern von Bilddaten als Eingangsspeicher für die Einrichtung 120 zum Erzeugen des Gesamtbildes, die beispielsweise durch eine Recheneinheit implementiert sein kann. Optional bezieht die Einrichtung 120 zum Erzeugen des Gesamtbildes die Gewichtung von der Einrichtung 130 zum Speichern der Gewichtung, die wiederum als Speicher realisiert sein kann, der Koeffizienten zur Korrektur der Einzelbilder zur Verfügung stellt. Die Einrichtung 130 zum Speichern der Gewichtung kann demnach als Korrekturspeicher implementiert sein. Prinzipiell sind auch Ausführungsbeispiele ohne die Einrichtung 130 zum Speichern und ohne die Einrichtung 140 zur Ausgabe denkbar. Beispielsweise könnte eine Gewichtung auch von der Einrichtung 120 zum Erzeugen des Gesamtbildes immer wieder neu berechnet oder bestimmt werden.

Beispielsweise können Ausführungsbeispiele der erfindungsgemäßen Vorrichtung 100, wie beispielhaft in Fig. 1 gezeigt, auch aus mehreren Bildspeichern bestehen, die die Einrichtung 110 zum Speichern der Bilddaten realisieren, und die die von einzelnen Kameramodulen aufgenommenen Teilbilder enthalten. Die Einrichtung 120 zum Erzeugen, die beispielsweise als Recheneinheit realisiert werden kann, führt die Berechnungen zur Reduzierung der Artefakte durch und könnte in einem weiteren Ausführungsbeispiel ein Mikrocontroller oder Prozessor sein. Die optionale Einrichtung 130 zum Speichern der Gewichtung fungiert als Korrekturspeicher, in dem die Gewichtungen der einzelnen Bilder abgelegt sind. Diese Gewichtung kann beispielsweise von der geometrischen Lage eines Bildpunktes in einem Teilbild relativ zu einem Überlappungsbereich mit einem zweiten Teilbild abhängen. Diese Abhängigkeit kann einmalig berechnet werden, und anschließend in der Einrichtung 130 zum Speichern der Gewichtung abgelegt werden. Dies wäre beispielsweise der Fall in einem Ausführungsbeispiel, in dem Einzelkameras auf einem starren Träger montiert sind, so daß ihre relative Position zueinander und damit auch die Position der Teilbilder zueinander statisch sind. Nachdem nun die individuellen Korrekturfaktoren einmalig bestimmt wurden, können diese in einer Einrichtung 130 zum Speichern der Gewichtung vorgehalten werden. Die bearbeiteten Daten, oder das Gesamtbild, werden dann für nachfolgende Bearbeitungen ausgegeben, was optional durch eine Einrichtung 140 zur Ausgabe geschehen kann, die wiederum beispielsweise durch einen Speicher oder auch eine Anzeigevorrichtung realisiert sein kann.

Die Teilbilder der einzelnen Kameramodule sollten sich überlappen, damit die hier beschriebene Korrektur ausgeführt werden kann. Überlappen sich beispielsweise M Teilbilder, so werden in einem Übergangsbereich bei Wahl des entsprechenden Koordinatenursprungs für jedes Teilbild die Daten aus den jeweiligen Quellbildern nach folgender Vorschrift gewichtet gemittelt:

$$p(x, y) = \sum_{i=1}^{M} W_i(x, y) \cdot p_i(x, y) \qquad \text{(Gl. 1)}$$

mit

$$\sum_{i=1}^{M} W_i(x, y) = 1,$$

wobei $W_i(x,y)$ einer Gewichtungsfunktion und $p_i(x,y)$ der Wert des Bildpunktes im Teilbild i an den Koordinaten (x,y) darstellt.

Der Wert eines Bildpunktes $p_i(x,y)$ an der Stelle (x,y) kann beispielsweise eine Intensitätsinformation aufweisen, so dass die Intensität eines Bildpunktes im Gesamtbild in einem Überlappungsbereich, aus einer Linearkombination der Intensitätsinformationen der Bildpunkte der Teilbilder bestimmt wird. Die Gewichtungsfunktion $W_i(x,y)$ ordnet dabei beispielsweise in Abhängigkeit der geometrischen Lage eines Bildpunktes und der geometrischen Lage des Überlappungsbereiches nach einer linearen, in andren Ausführungsbeispielen auch nichtlinearen, Vorschrift den einzelnen Bildpunkten der Teilbilder i Gewichtungsfaktoren zu.

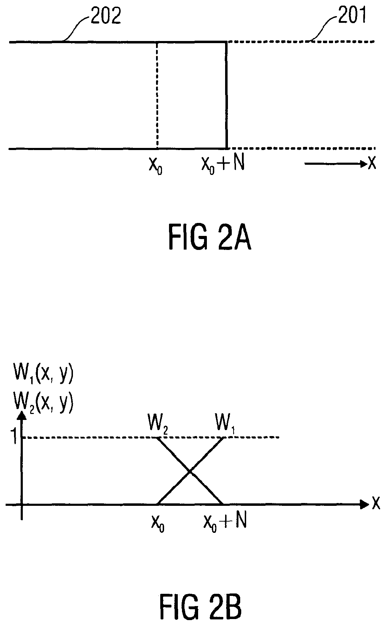

Die Gewichtungsfunktion kann beispielsweise bei einer Überlappung von zwei Teilbildern in horizontaler Richtung mit einer Breite von N Pixeln linear ermittelt werden. Dieses Ausführungsbeispiel ist zunächst in Fig. 2a illustriert. Fig. 2a zeigt zwei sich überlappende Teilbilder 201 und 202, wobei die Kontur des Teilbildes 201 zur Verdeutlichung durch gestrichelte Linien angedeutet ist. In Fig. 2a ist weiterhin eine Laufvariable x angegeben, die zur rechten Bildseite hin zu steigenden Werten verläuft. Der Überlappungsbereich der beiden Teilbilder 201 und 202 erstreckt sich im Bereich $x_0$, also die Stelle an der das Teilbild 201 beginnt (linker Rand), bis zur Koordinate $x_0 + N$, also die Stelle an der das Teilbild 202 beginnt (rechter Rand), so dass sich ein Überlappungsbereich von N Pixeln ergibt. Um nun den Bildpunkten der beiden Teilbilder 201 und 202 unterschiedliche Gewichtungsfaktoren in Abhängigkeit ihrer geometrischen Lage aufzuerlegen, bedient sich das in den Fig. 2a und Fig. 2b illustrierte Ausführungsbeispiel einer Gewichtungsfunktion im Definitionsbereich $\{x_0, ..., x_{0+N}\}$, also eine Gewichtungsfunktion, die im Überlappungsbereich definiert ist.

Zwei beispielhafte Funktionen

$$W_1(x,y) = (x - x_0)/N$$

und

$$W_2(x,y) = (N - (x - x_0))/N$$

sind in Fig. 2b dargestellt. $W_1(x,y)$ bezeichnet die Gewichtungsfaktoren, mit denen die Bilddaten der Bildpunkte des Teilbildes 201 gewichtet werden. Im hier betrachteten Ausführungsbeispiel liegt keine Abhängigkeit der Gewichtungsfunktion $W_1(x,y)$ und $W_2(x,y)$ von der Koordinate y vor. Generell sind Abhängigkeiten von beiden Koordinate x und y möglich. Es ist am Verlauf der Funktion $W_1(x,y)$ in Fig. 2b zu sehen, dass die Gewichtungsfaktoren am linken Rand des Überlappungsbereiches, d. h. bei $x_0$, zunächst bei 0 beginnen und sich dann über den Überlappungsbereich hinweg bis auf den Faktor 1 steigern. Dies hat zur Folge, dass Bilddaten der Bildpunkte des Teilbildes 201 geringer gewichtet werden, je weiter sie in den Überlappungsbereich hineinragen. Dies gilt ebenso für die Bilddaten der Bildpunkte des Teilbildes 202. Der Verlauf der Gewichtungsfaktoren der zugehörigen Gewichtungsfunktion $W_2(x,y)$ ist ebenfalls in Fig. 2b dargestellt. Aufgrund der gespiegelten Lage beginnen die Gewichtungsfaktoren der Bildpunkte des Teilbildes 202 zunächst bei einem Faktor von 1 und fallen dann über den Überlappungsbereich hinweg auf einen Gewichtungsfaktor von 0, so daß auch für das Teilbild 201 Bildpunkte zum Rand des Teilbildes hin weniger gewichtet werden.

Im in den Fig. 2a und 2b dargestellten Ausführungsbeispiel wird davon ausgegangen, dass die Gewichtungsfunktionen $W_1(x,y)$ und $W_2(x,y)$ nicht von y abhängen und in vertikaler Richtung somit keine Änderungen der Gewichtungsfaktoren auftreten. Prinzipiell sind auch andere Gewichtungsfunktionen denkbar, beispielsweise bei sich vertikal überlappenden Teilbildern oder in den Eckbereichen, wobei sich generell auch mehr als zwei Bilder überlappen können. Ausführungsbeispiele der vorliegenden Erfindung zeichnen sich dadurch aus, dass Bildpunkte gewichtet und überlagert werden, wobei die Vorschrift der Gewichtung sowohl linear als auch nichtlinear von der Geometrie der Anordnung abhängen kann, sowie auch Abhängigkeiten der Gewichtung von anderen Parametern vorkommen können. Nach gleicher oben beschriebenen Berechnung eines Ausgangspixels p(x,y) des Gesamtbildes ist auch eine nichtlineare Gewichtungsfunktion W(x,y) einsetzbar, sofern sie die Bedingung aus Gleichung 1 erfüllt.

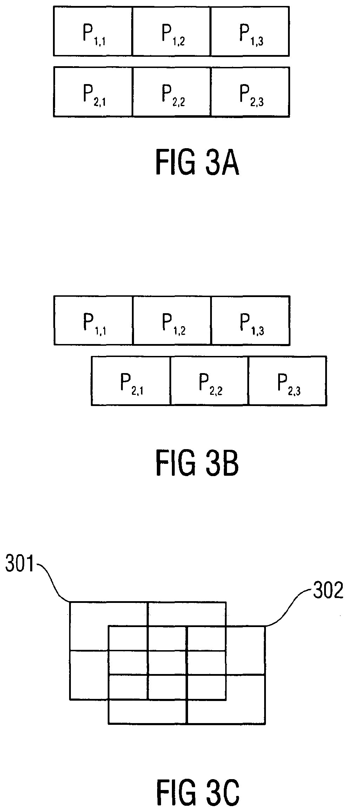

Die Fig. 3a bis Fig. 3c illustrieren einen Versatz zwischen Pixeln im Überlappungsbereich, beispielsweise hervorgerufen durch vorherige geometrische Teilbildkorrekturen. Fig. 3a zeigt je drei Pixel eines ersten Teilbildes, bezeichnet mit $P_{1,1}$, $P_{1,2}$ und $P_{1,3}$, sowie eines zweiten Teilbildes, die als $P_{2,1}$, $P_{2,2}$ und $P_{2,3}$ bezeichnet sind. Die Ausrichtung der Pixel in Fig. 3a weist darauf hin, dass es zwischen den Teilbildern keinen Versatz gibt. Demzufolge könnte beispielsweise die Intensität eines Bildpunktes des Gesamtbildes berechnet werden als

$$p_1 = 0{,}75 \cdot P_{1,1} + 0{,}25 \cdot P_{2,1},$$

wobei die Gewichtungsfaktoren hier zur Verdeutlichung des Ausführungsbeispiels willkürlich gewählt sind. Fig. 3b zeigt zur Verdeutlichung wiederum je drei Pixel zweier Teilbilder, die identisch wie diejenigen in Fig. 3a benannt sind. Im Vergleich zu Fig. 3a weisen die Pixel in Fig. 3b jedoch einen Versatz auf. Um nun beispielsweise eine Intensität eines Bildpunktes des Gesamtbildes zu berechnen, der im Vergleich zu den Punkten $P_{2,*}$ keinen Versatz aufweist, könnte beispielsweise die Intensität der Punkte des ersten Teilbildes $P_{1,*}$ wiederum gewichtet werden. Beispielweise wäre dann

$$p_1 = 0,375 \cdot P_{1,1} + 0,375 \cdot P_{1,2} + 0,25 \cdot P_{2,1}.$$

Auf diese Art und Weise können Überlappungen, wie sie auch mit dem Pixelraster des Gesamtbildes auftreten, berücksichtigt werden.

Fig. 3c zeigt ebenfalls zwei sich überlappende Teilbereiche zweier Teilbilder 301 und 302. Fig. 3c soll nun verdeutlichen, dass es auch zu Überlappungen von vier oder mehreren Pixeln kommen kann, die entsprechend der Ausführungsbeispiele aus den Fig. 3a und 3b gewichtet werden können.

Nach den Abbildungen 3a - 3c kann ein Versatz zwischen den Pixeln im Überlappungsbereich beispielsweise aufgrund vorheriger geometrischer Bildkorrekturen entstehen. Um trotzdem eine subpixelgenaue Korrektur auszuführen, kann es also allgemein möglich sein, dass sich ein Eingangspixel $p_i(x,y)$ nicht aus einem Pixel pro Teilbild M, sondern aus nxm Pixeln zusammensetzt. Dieser Fall ist insbesondere denkbar, wenn Bilder unterschiedlicher Auflösungen vorliegen. Ebenfalls skaliert hierbei die Anzahl der Gewichtungsfaktoren mit der Anzahl der benötigten Pixel.

$$p(x, y) = \sum_{i=1}^{M} \sum_{k=0}^{n} \sum_{j=0}^{m} W_i(x + k, y + j) \cdot p_i(x + k, y + j) \qquad (\text{Gl. } 2)$$

$$\text{mit} \sum_{i=1}^{M} \sum_{k=0}^{n} \sum_{j=0}^{m} W_i(x + k, y + j) = 1.$$

Durch eine geeignete Wahl der Gewichtungsfunktionen relativ zu den Überlappungsflächen können Artefakte im Gesamtbild stark reduziert werden. Wie bereits oben erwähnt, kann die Gewichtungsfunktion optional in geeigneter Form in einem Korrekturspeicher abgelegt werden.

Die Einrichtung 120 zum Erzeugen des Gesamtbildes, beispielsweise eine Recheneinheit, erzeugt die korrigierten Gesamtbilddaten bzw. Ausgangsbilddaten, indem die Bilddaten aus den einzelnen Teilbildern mit entsprechenden Gewichtungsfaktoren multipliziert werden und dann aufaddiert werden, gegebenenfalls in Abhängigkeit vorhandener Daten im Korrekturspeicher.

Je nach Ausführungsbeispiel der vorliegenden Erfindung kann es auch vorkommen, dass in einem resultierenden Bild, also in einem Gesamtbild, immer noch starke Grauwertsprünge nach der gewichteten Mittelung erkennbar sind, was z. B. dann möglich ist, wenn der Überlappungsbereich der Sensoren oder Kameras nicht groß genug ist. In einem solchen Fall ist es möglich, auf einen Bereich von Bildpunkten in den einzelnen Teilbildern zurückzugreifen, der über den Überlappungsbereich hinausgeht. In einem solchen Fall hängt also ein Bildpunkt des Gesamtbildes nicht alleine von den sich überlappenden Bildpunkten der einzelnen Teilbilder ab, sondern auch von Bildpunkten der Teilbilder in einer Umgebung des Bildpunktes des Gesamtbildes. Es kann also hier gemäß Gleichung 2 auch eine mehrdimensionale Filterfunktion definiert werden, die eine hinreichend große Anzahl von Bildpunkten, beispielsweise durch zusätzliche Inbetrachtnahme von Bildpunkten unmittelbar vor dem Überlappungsbereich, ebenfalls mit einer geeigneten Gewichtungsfunktion multipliziert, um somit einen weicheren Übergang von einem Sensor zum anderen zu realisieren. Dabei ist es denkbar, dass sich ein Bildpunkt im Gesamtbild nur in der Abhängigkeit der Bildpunkte eines Teilbildes und deren Gewichtungsfaktoren ergibt, d. h. dass er nur von den Bildpunkten des Teilbildes beeinflusst wird, die am gleichen geometrischen Ort liegen, wie der Bildpunkt des Gesamtbildes.

In einem anderen Ausführungsbeispiel wird auch hier eine Filterfunktion eingesetzt, das bedeutet, dass ein Bildpunkt im Gesamtbild von Gewichtungsfaktoren und den Bildpunkten der Teilbilder abhängt, die am gleichen geometrischen Ort liegen wie der Bildpunkt im Gesamtbild, und von den Punkten in einer geometrischen Umgebung um den geometrischen Ort des Bildpunktes des Gesamtbildes herum. Alle übrigen Eingangsbildpunkte werden dann unverändert in das Gesamtbild übertragen.

Im allgemeinen Fall würde in einem Ausführungsbeispiel der vorliegenden Erfindung ein Bildpunkt im Gesamtbild von allen Bildpunkten der Teilbilder abhängen, wobei die Gewichtungsfunktion einem jeden Bildpunkt in einem jeden Teilbild einen Gewichtungsfaktor zuordnet.

Aus Gründen der Anschaulichkeit und Übersichtlichkeit beziehen sich die folgenden Betrachtungen auf Überlappungsbereiche von lediglich zwei Teilbildern. Generell sind Überlappungen von beliebig vielen Teilbildern denkbar, wobei die Überlappungsbereiche dann eine beliebige Gestalt annehmen können.

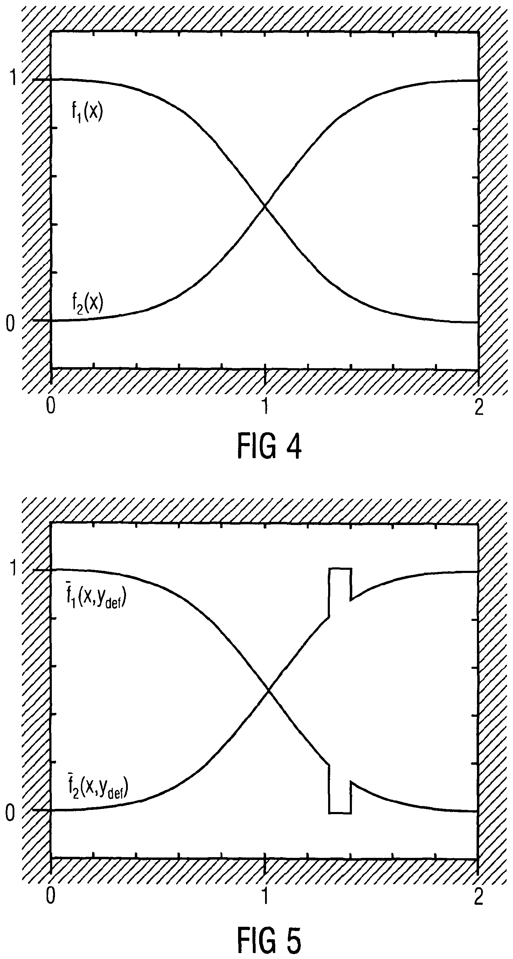

Die Fig. 4 zeigt zwei Ausführungsbeispiele von Gewichtungsfunktionen $f_1(x)$ und $f_2(x)$, die nicht-lineare Verläufe in einem Überlappungsbereich realisieren. Dabei könnte beispielsweise

$$f_1(x) = e^{-(x-0.12)^{\delta}} \qquad (1)$$

und

$$f_2(x) = 1 - f_1(x). \qquad (2)$$

In der Fig. 4 sind die beiden Funktionsverläufe über dem Definitionsbereich $x \in \{0..2\}$ und dem Wertebereich $f_{1/2} \in \{0..1\}$. Wie in der Fig. 4 zu erkennen ist, erfüllen die beiden Funktionen $f_1(x)$ und $f_2(x)$ das Summationskriterium, nämlich dass die Summe an jeder Koordinate gleich 1 ist. Solche nicht-linearen Gewichtungsfunktionen können beispielsweise zum Überblenden oder Verschmelzen der Teilbilder im Rand- oder Überlappungsbereich dienen. Generell sind beliebige andere Funktionen möglich. Der Definitionsbereich und Wertebereich, wie er anhand der Fig. 4 erläutert wurde, gilt auch für die im Folgenden näher erläutert werdenden Ausführungsbeispiele von Gewichtungsfunktionen.

Bei der Erfassung der einzelnen Teilbilder, insbesondere wenn es sich dabei um Röntgenbilder handelt, können fehlerbehaftete Bildpunkte auftreten. Dies kann zum einen an einem Hardwaredefekt des Bildsensors liegen, zum anderen aber auch an Alterungserscheinungen, die beispielsweise an Kameras oder Röntgendetektoren entstehen können. Zur Detektion solcher Fehler ist es beispielsweise denkbar, dass anhand von Kalibrierungsbildern, die über bekannte Inhalte verfügen, festgestellt werden kann, welche Bildpunkte der Teilbilder korrekt abgebildet werden, bzw. welche Bildpunkte der Teilbilder fehlerhaft sind. Als Kalibrierungsbilder wären z.B. Hellbilder denkbar, bei denen jeder Bildpunkt eines Teilbildes weiß erscheinen sollte und solche Bildpunkte, die ein Mindestmaß an Helligkeit nicht überschreiten, als fehlerhaft klassifiziert werden können. Eine ähnliche Vorgehensweise wäre beispielsweise denkbar, wenn Dunkelbilder verwendet werden, also solche, die nur dunkle oder schwarze Bildpunkte hervorrufen sollen, und bei denen diejenigen Bildpunkte als fehlerhaft klassifiziert werden, die ein gewisses Helligkeitsmaß überschreiten.

Im Folgenden wird deshalb davon ausgegangen, dass fehlerhafte Bildpunkte bekannt seien. Die Fig. 5 zeigt zwei beispielhafte Gewichtungen oder Gewichtungsfunktionen, die die Vorgehensweise von Ausführungsbeispielen bei einem fehlerhaften Bildpunkt weiter erläutern. Die Fig. 5 zeigt zwei Funktionsverläufe

$$\bar{f}_1(x,y) = \begin{cases} 0 & x = x_{def}; y = y_{def} \\ f_1(x) & sonst \end{cases} \qquad (3)$$

und

$$\tilde{f}_2(x,y) = 1 - \tilde{f}_1(x,y) \quad . \qquad (4)$$

Die in der Fig. 5 dargestellten Funktionsverläufe repräsentieren beispielhaft eine Gewichtungsfunktion oder Verschmelzungsfunktion für den Fall von fehlerhaften Bildpunkten oder so genannten Pixeldefekten. In dem Defektbereich, der in der Fig. 5 zwischen x=1,2 und x=1,4 liegt, wird deutlich, dass im hier betrachteten Ausführungsbeispiel ausschließlich auf Bildpunkte aus dem intakten Teilbild gemäß der Funktion $f_2(x,y)$ zugegriffen wird. Gemäß der Gleichung 3 befindet sich in der Fig. 5 der fehlerhafte Bildpunkt an den Koordinaten $x_{def}$, $y_{def}$. Anhand der Fig. 5 ist zu erkennen, dass fehlerhafte Bildpunkte durch die Gewichtung gänzlich ausgeblendet werden können. Dabei wird dann lediglich auf intakte Bildpunkte anderer Teilbilder zurückgegriffen. Ähnliche Ausführungsbeispiele berücksichtigen eine Mehrzahl von Teilbildern in einem Bereich, wobei die jeweils fehlerhaften Pixel ausgeblendet werden können.

Ausführungsbeispiele bieten somit den Vorteil, dass Beispielsweise Alterungseffekte von Röntgendetektoren, die sich in zunehmenden Pixeldefekten äußern, ausgeglichen werden können. Generell können über die Gewichtungsfunktionen eine beliebige Anzahl von fehlerhaften Bildpunkten im Überlappungsbereich ausgeglichen werden. Ferner bieten Ausführungsbeispiele die Möglichkeit, nachträglich über die Gewichtungsfunktionen neu hinzugefügte Teilbilder einzublenden. Insbesondere in der Qualitätskontrolle von Gussteilen mittels Röntgenbildern ist es somit möglich, Bildbereiche, in denen vermehrt fehlerhafte Bildpunkte auftreten, durch zusätzliche Detektoren und somit zusätzliche Teilbilder abzudecken. Die jeweiligen Gewichtungsfunktionen, die beliebige Gestalt annehmen können, erlauben dann auch nachträglich eingefügte Teilbilder einzublenden, die Bereiche mit häufigeren fehlerhaften Bildpunkten abdecken. Bei der Qualitätskontrolle von beispielsweise Aluminiumgussteilen, kommen Röntgendetektoren häufig zum Einsatz. Da die Gussteile oftmals eine Dimension aufweisen, die mit einem einzelnen Röntgendetektor nicht erfassbar wäre, kommen hier häufig mehrere Röntgendetektoren zum Einsatz.

Die jeweilige Belastung der Detektoren durch die Röntgenstrahlung hängt dabei von deren Position und beispielsweise der Form der Prüflinge ab. So kann es vorkommen, dass in der Qualitätskontrolle solche Sensoren unterschiedlichem Verschleiß unterliegen. Ausführungsbeispiele bieten hier den Vorteil, dass durch entsprechend regelmäßige Kalibrierung Pixelfehler in unterschiedlich belasteten Detektoren ausgeglichen werden können, wobei die jeweiligen Gewichtungen entsprechend angepasst werden können.

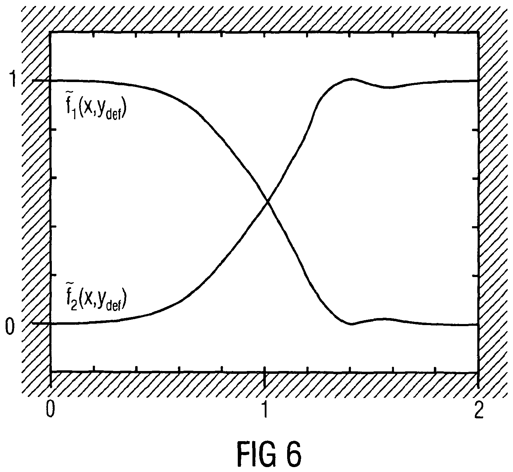

Weitere Ausführungsbeispiele können eine sanftere Ein- bzw. Ausblendung von Fehlerpunkten aufweisen. Zu diesem Zweck sind zwei weitere Gewichtungsfunktionen in der Fig. 6 dargestellt. Je nachdem um welche Art von Teilbildern es sich handelt, besteht die Möglichkeit, dass sich fehlerhafte Bildpunkte nach Korrektur etwas von ihrer Umgebung abheben. Bei einer einfachen Störungsbehandlung in einem Ausführungsbeispiel besteht je nach Ausgangsmaterial die Möglichkeit, dass sich ein ergänzter defekter Bildpunkt von seiner Umgebung ein wenig unterscheidet. Daher kann es in Ausführungsbeispielen auch vorteilhaft sein, die Gewichtungsfunktionen in einer Umgebung des fehlerhaften Bildpunktes gleitend anzupassen. Zwei solche Funktionen sind in der Fig. 6 dargestellt. Im Vergleich zu den in der Fig. 5 dargestellten Ausführungsbeispielen der Gewichtungen, wird in der Fig. 6 der fehlerhafte Bildpunkt nicht hart ausgeblendet und durch den korrespondierenden Bildpunkt des anderen Teilbildes ersetzt, sondern sanft ausgeblendet, wohingegen die korrekten Bildpunkte des anderen Teilbildes entsprechend langsamer oder sanfter eingeblendet werden.

Das Ausführungsbeispiel der Fig. 6 zeigt deutlich, dass eine Sonderbehandlung der fehlerhaften Bildpunkte möglich ist, da für jeden einzelnen Bildpunkt eine eigene Verschmelzungsfunktion angegeben werden kann. Ausführungsbeispiele bieten somit den Vorteil, dass beliebige fehlerhafte Bildpunkte in den Teilbildern korrigiert werden können. Dies ist besonders dann relevant, wenn solche Defekte nicht einzeln, sondern zufällig über die Bilder verteilt auftreten.

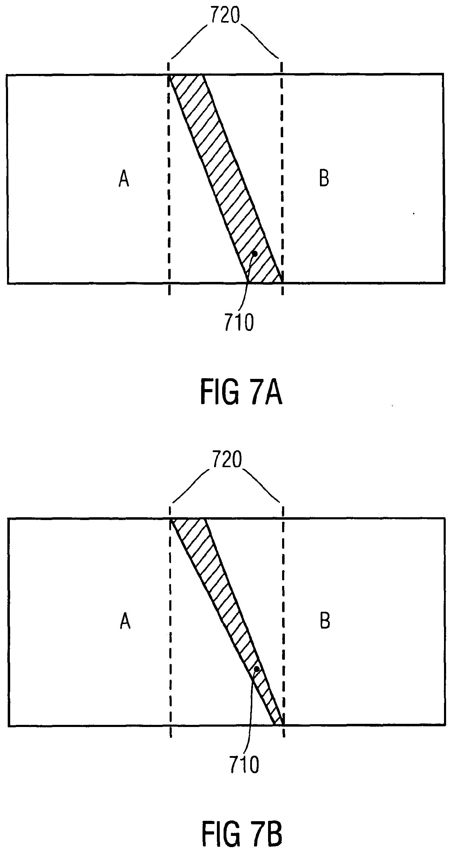

Wie bereits eingehend erwähnt, können die einzelnen Teilbilder zunächst geometrisch korrigiert werden, beispielsweise sind rotatorische oder translatorische Umformungen, sowie Streckungen oder Stauchungen denkbar. In Abhängigkeit dieser geometrischen Anpassungen, kann die Form der jeweiligen Überlappungsbereiche entsprechend abweichen. Wenn also die Bilder einer geometrischen Korrektur unterliegen, insbesondere wenn dabei eine Rotation involviert ist, dann ist der Überlappungsbereich häufig nicht mehr rechteckig. Ausführungsbeispiele der vorliegenden Erfindung bieten den Vorteil, dass die Überlappungsbereiche der einzelnen Teilbilder beliebige Gestalt annehmen können. Dies kann zum einen durch geometrische Korrekturen hervorgerufen werden, zum anderen auch durch fehlerhafte Bildpunkte, die entsprechend in den Gewichtungsfunktionen berücksichtigt werden können. Generell wäre für eine Verschmelzung ein möglichst breiter Überlappungsbereich wünschenswert. In der Realität ist eine Beschränkung auf einen rechteckigen Bereich oft nicht möglich. Die Fign. 7a und 7b illustrieren diese Effekte. In den Fig. 7a und 7b sind jeweils zwei Teilbilder A und B dargestellt, die sich in einem schraffierten Bereich 710 überlappen. Der schraffierte Bereich stellt dabei den effektiven Überlappungsbereich 710 dar. Ferner sind in den Fig. 7a und 7b rechteckige Überlappungsbereiche 720, die durch gestrichelte Linien begrenzt sind, eingezeichnet. Die Überlappungsbereiche 720 entsprechen rechteckigen Überlappungsbereichen, wie sie in konventionellen Gewichtungsverfahren zum Einsatz kommen.

Die Fig. 7a und 7b illustrieren anhand der effektiven Überlappungsbereiche 710, diejenigen Bereiche, auf die die Gewichtungsfunktionen angepasst werden können. Dabei können, wie die Fig. 7a und 7b illustrieren sollen, beliebige Formen von Überlappungsbereichen auftreten. Gewichtungsfunktionen, die sich lediglich auf rechteckige Überlappungsbereiche beziehen, können zu Fehlanpassungen führen. Insbesondere streng lineare Funktionen können einen Bereich 710, beispielsweise wie in der Fig. 7b dargestellt ist, nicht optimal anpassen. An den in Fig. 7a und 7b gezeigten Beispielen wird deutlich, dass eine Gewichtungsfunktion, die global auf dem gesamten Überlappungsbereich angewendet wird nicht optimal ist. Gemäß Ausführungsbeispielen der vorliegenden Erfindung kann eine Gewichtungsfunktion an die entsprechende Form eines Überlappungsbereiches angepasst werden und somit eine genauere Überlagerung und letztendlich ein besseres, qualitativ hochwertigeres Gesamtbild erzeugt werden.

Ausführungsbeispiele bieten somit den Vorteil, dass beliebige fehlerhafte Bildpunkte und beliebige Überlappungsbereiche abgedeckt werden können. Da beliebige, auch nicht lineare Gewichtungsfunktionen benutzt werden können, sind den Formen der Überlappungsbereiche keine Grenzen gesetzt. Dies ist insbesondere dann von Vorteil, wenn sich mehrere Teilbilder in einem Überlappungsbereich überlagern, wobei die einzelnen Teilbilder unterschiedliche geometrische Anpassungen erfahren haben.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem und/oder Mikrocontroller zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner und/oder Mikrocontroller abläuft. In anderen Worten ausgedrückt kann die Erfindung somit als ein Computerprogramm mit einem Programmcode zur Durchführung des Verfahrens realisiert werden, wenn das Computerprogramm auf einem Computer und/oder Mikrocontroller abläuft.

Die vorliegende Erfindung bietet den Vorteil, dass insbesondere in der Vorverarbeitung von Röntgenbilddaten, wie sie in der Qualitätskontrolle oder Qualitätsprüfung von größeren metallischen Bauteilen, wie beispielsweise Aluminiumfelgen vorkommen, eine höhere Reduzierung von Übergangsartefakten in einem Gesamtbild erreicht werden kann, das sich aus einzelnen Teilbildern zusammensetzt. Die erfindungsgemäße Vorverarbeitung der Bilddaten und das erfindungsgemäße Zusammensetzen und Bearbeiten der Überlappungsbereiche erlaubt somit eine verbesserte Qualitätskontrolle, in der es zu weniger Fehlalarmen aufgrund von Grausprüngen in den Überlappungsbereichen der Teilbilder kommt.

**Patentansprüche**

1. Vorrichtung (100) zur Reduzierung von Übergangsartefakten in einem Gesamtbild, das sich aus Teilbildern zusammensetzt, deren Bildbereiche Überlappungsbereiche aufweisen, mit folgenden Merkmalen:

   einer Einrichtung (110) zum Speichern von Bilddaten der Bildpunkte der Teilbilder; und
   einer Einrichtung (120) zum Erzeugen des Gesamtbildes, basierend auf den Bilddaten der Teilbilder durch Überlagerung der Bilddaten der Bildpunkte in den Überlappungsbereichen gemäß einer Gewichtung, wobei jedem der Teilbereiche in dem Überlappungsbereich eine Gewichtungsfunktion ($f_1$, $f_2$) zugeordnet ist, **dadurch gekennzeichnet, dass**
   die Gewichtungsfunktionen ($f_1$, $f_2$) der Teilbilder im Falle eines fehlerhaften Bildpunktes in einem der Teilbilder an der Position des fehlerhaften Bildpunktes derart modifiziert werden, dass der fehlerhafte Bildpunkt gänzlich ausgeblendet wird und lediglich auf intakte Bildpunkte der anderen Teilbilder zurückgegriffen wird, so dass ein Einfluss eines fehlerhaft erfassten Bildpunktes eines Teilbildes, der in dem Gesamtbild ein Artefakt hervorrufen würde, in dem Gesamtbild reduziert ist, und
   die Gewichtungsfunktionen ($f_1$, $f_2$) der Teilbilder in einer Umgebung des fehlerhaften Bildpunktes gleitend angepasst werden.

2. Vorrichtung (100) gemäß Anspruch 1, wobei die Teilbilder Überlappungsbereiche aufweisen, die nicht rechteckförmig sind.

3. Vorrichtung (100) gemäß einem der Ansprüche 1 oder 2, die ferner eine Einrichtung (130) zum Speichern der Gewichtung aufweist.

4. Vorrichtung (100) gemäß einem der Ansprüche 1 bis 3, die ferner eine Einrichtung (140) zur Ausgabe des Gesamtbildes aufweist.

5. Vorrichtung (100) gemäß einem der Ansprüche 1 bis 4, bei der die Einrichtung (120) zum Erzeugen des Gesamtbildes ausgebildet ist, um die Gewichtung der Bilddaten eines Bildpunktes von der geometrischen Lage des Bildpunktes relativ zum Überlappungsbereich abhängig zu machen.

6. Vorrichtung (100) gemäß einem der Ansprüche 1 bis 5, bei der die Einrichtung (110) zum Speichern ausgebildet ist, um in Bilddaten eines Bildpunktes eine Intensitätsinformation zu speichern, und bei der die Einrichtung (120) zum Erzeugen des Gesamtbildes ausgebildet ist, um die Intensität eines Bildpunktes des Gesamtbildes in einem Überlappungsbereich gemäß einer Linearkombination der Intensitätsinformation der Bildpunkte der Teilbilder zu erzeugen.

7. Vorrichtung (100) gemäß Anspruch 6, bei der sich eine Intensität p(x,y) eines Bildpunktes mit den Koordinaten x und y in dem Gesamtbild aus

$$p(x, y) = \sum_{i=1}^{M} \sum_{k=0}^{n} \sum_{j=0}^{m} W_i(x + k, y + j) \cdot p_i(x + k, y + j)$$

mit

$$\sum_{i=1}^{M} \sum_{k=0}^{n} \sum_{j=0}^{m} W_i(x + k, y + j) = 1$$

ergibt, wobei M die Anzahl der Teilbilder ist und von jedem Teilbild jeweils nxm Bildpunkte zum Bestimmen einer Intensität eines Bildpunktes des Gesamtbildes herangezogen werden.

8. Vorrichtung (100) gemäß einem der Ansprüche 1 bis 7, bei der die Einrichtung (120) zum Erzeugen des Gesamtbildes ausgebildet ist, um die Überlagerung von Bilddaten von Bildpunkten über den Überlappungsbereich hinaus durchzuführen.

9. Vorrichtung (100) gemäß einem der Ansprüche 7 oder 8, bei der die Einrichtung (120) zum Erzeugen des Gesamtbildes ausgebildet ist, um die Gewichtung der Bilddaten eines Bildpunktes eines Teilbildes an einem Bildpunkt im Gesamtbild von seinem Abstand zur Grenze des Überlappungsbereichs abhängig zu machen.

10. Vorrichtung (100) gemäß einem der Ansprüche 1 bis 9, bei der die Einrichtung (120) zum Erzeugen des Gesamtbildes ausgebildet ist, um die Bilddaten eines Bildpunktes im Gesamtbild von einer Mehrzahl von Bilddaten von Bildpunkten eines Teilbildes abhängig zu machen.

11. Vorrichtung (100) gemäß einem der Ansprüche 1 bis 10, bei der die Einrichtung (110) zum Speichern und Einrichtung (120) zum Erzeugen des Gesamtbildes ausgebildet sind, um Bilddaten der Teilbilder die Röntgenbilddaten aufweisen zu verarbeiten.

12. Vorrichtung (100) gemäß Anspruch 11, bei der die Bilddaten der Teilbilder Röntgenbilddaten von Ausschnitten des gleichen Objektes aufweisen.

13. Verfahren zur Reduzierung von Übergangsartefakten in einem Gesamtbild, das sich aus Teilbildern zusammensetzt, deren Bildbereiche Überlappungsbereiche aufweisen, mit folgenden Schritten:

Speichern der Bilddaten der Bildpunkte der Teilbilder; und
Erzeugen des Gesamtbildes, basierend auf den Bilddaten der Teilbilder durch Überlagerung der Bilddaten der Bildpunkte in den Überlappungsbereichen gemäß einer Gewichtung,
wobei jedem der Teilbereiche in dem Überlappungsbereich eine Gewichtungsfunktion ($f_1$, $f_2$) zugeordnet ist,
**dadurch gekennzeichnet, dass**
die Gewichtungsfunktionen ($f_1$, $f_2$) der Teilbilder im Falle eines fehlerhaften Bildpunktes in einem der Teilbilder an der Position des fehlerhaften Bildpunktes derart modifiziert werden, dass der fehlerhafte Bildpunkt gänzlich ausgeblendet wird und lediglich auf intakte Bildpunkte der anderen Teilbilder zurückgegriffen wird, so dass ein Einfluss eines fehlerhaft erfassten Bildpunktes eines Teilbildes, der in dem Gesamtbild ein Artefakt hervorrufen würde, in dem Gesamtbild reduziert ist, und
die Gewichtungsfunktionen ($f_1$, $f_2$) der Teilbilder in einer Umgebung des fehlerhaften Bildpunktes gleitend angepasst werden.

14. Computerprogramm mit einem Programmcode zur Durchführung des Verfahrens nach Anspruch 13, wenn der Programmcode auf einem Computer ausgeführt wird.

**Claims**

1. An apparatus (100) for reducing transition artifacts in an overall image composed of sub-images whose image areas comprise overlap areas, the apparatus comprising:

means (110) for storing image data of the pixels of the sub-images; and
means (120) for generating the overall image on the basis of the image data of the sub-images by superposition of the image data of the pixels in the overlap areas in accordance with a weighting,
wherein each of the subareas in the overlap area comprises a weighting function ($f_1$, $f_2$) associated with it, and
**characterized in that**
the weighting functions ($f_1$, $f_2$) of the sub-images in the case of a defective pixel in one of the sub-images are modified at the position of the defective pixel such that the defective pixel is faded out entirely and that only intact pixels of the other sub-images are used, so that any influence of an incorrectly detected pixel of a sub-image which would cause an artifact in the overall image is reduced in the overall image, and
the weighting functions ($f_1$, $f_2$) of the sub-images are floatingly adapted in an environment of the defective pixel.

2.   The apparatus (100) as claimed in claim 1, wherein the sub-images comprise overlap areas which are not rectangular.

3.   The apparatus (100) as claimed in one of claims 1 or 2, further comprising means (130) for storing the weighting.

4.   The apparatus (100) as claimed in any of claims 1 to 3, further comprising means (140) for outputting the overall image.

5.   The apparatus (100) as claimed in any of claims 1 to 4, wherein the means (120) for generating the overall image is configured to perform the weighting of the image data of a pixel in dependence on the geometric location of the pixel in relation to the overlap area.

6.   The apparatus (100) as claimed in any of claims 1 to 5, wherein the means (110) for storing is configured to store intensity information in image data of a pixel, and wherein the means (120) for generating the overall image is configured to generate the intensity of a pixel of the overall image in an overlap area in accordance with a linear combination of the intensity information of the pixels of the sub-images.

7.   The apparatus (100) as claimed in claim 6, wherein an intensity $p(x,y)$ of a pixel comprising the coordinates x and y in the overall image results from

$$p(x, y) = \sum_{i=1}^{M} \sum_{k=0}^{n} \sum_{j=0}^{m} W_i(x + k, y + j) \cdot p_i(x + k, y + j)$$

with

$$\sum_{i=1}^{M} \sum_{k=0}^{n} \sum_{j=0}^{m} W_i(x + k, y + j) = 1 \ ,$$

wherein M is the number of sub-images, and wherein n×m pixels are used by each sub-image, respectively, for determining an intensity of a pixel of the overall image.

8.   The apparatus (100) as claimed in any of claims 1 to 7, wherein the means (120) for generating the overall image is configured to perform the superposition of image data of pixels beyond the overlap area.

9.   The apparatus (100) as claimed in any of claims 7 or 8, wherein the means (120) for generating the overall image is configured to render the weighting of the image data of a pixel of a sub-image at a pixel in the overall image dependent on its distance from the border of the overlap area.

10.  The apparatus (100) as claimed in any of claims 1 to 9, wherein the means (120) for generating the overall image is configured to render the image data of a pixel in the overall image dependent on a plurality of image data of pixels of a sub-image.

11.  The apparatus (100) as claimed in any of claims 1 to 10, wherein the means (110) for storing and the means (120) for generating the overall image are configured to process image data of those sub-images which comprise X-ray image data.

12.  The apparatus (100) as claimed in claim 11, wherein the image data of the sub-images comprises X-ray image data of sections of the same object.

13.  A method for reducing transition artifacts in an overall image composed of sub-images whose image areas have overlap areas, the method comprising:

    storing the image data of the pixels of the sub-images; and
    generating the overall image on the basis of the image data of the sub-images by superposition of the image data of the pixels in the overlap areas in accordance with a weighting,
wherein each of the subareas in the overlap area comprises a weighting function ($f_1$, $f_2$) associated with it, and
**characterized in that**
the weighting functions ($f_1$, $f_2$) of the sub-images in the case of a defective pixel in one of the sub-images are modified at the position of the defective pixel such that the defective pixel is faded out entirely and that only intact pixels of the other sub-images are used, so that any influence of an incorrectly detected pixel of a sub-image which would cause an artifact in the overall image is reduced in the overall image, and
the weighting functions ($f_1$, $f_2$) of the sub-images are floatingly adapted in an environment of the defective pixel.

14. A computer program comprising a program code for performing the method as claimed in claim 13, when the program code is executed on a computer.

**Revendications**

1. Dispositif (100) de réduction des artefacts de transition dans une image complète qui se compose d'images partielles dont les zones d'image présentent des zones de recouvrement, aux caractéristiques suivantes:

un moyen (110) destiné à mémoriser des données d'image des pixels des images partielles; et
un moyen (120) destiné à générer l'image complète sur base des données d'image des images partielles en superposant les données d'image des pixels dans les zones de recouvrement selon une pondération,
dans lequel une fonction de pondération ($f_1$, $f_2$) est attribuée à chacune des zones partielles dans la zone de recouvrement,
**caractérisé par le fait que**
les fonctions de pondération ($f_1$, $f_2$) des images partielles sont modifiées, dans le cas d'un pixel défectueux dans l'une des images partielles à la position du pixel défectueux, de sorte que le pixel défectueux soit complètement caché et qu'il soit recouru uniquement à des pixels intacts des autres images partielles, de sorte qu'une influence d'un pixel détecté de manière défectueuse d'une image partielle qui provoquerait un artefact dans l'image complète soit réduite dans l'image complète, et
les fonctions de pondération ($f_1$, $f_2$) des images partielles sont adaptées en continu dans un environnement du pixel défectueux.

2. Dispositif (100) selon la revendication 1, dans lequel les images partielles présentent des zones de recouvrement qui ne sont pas rectangulaires.

3. Dispositif (100) selon l'une des revendications 1 ou 2, qui présente par ailleurs un moyen (130) destiné à mémoriser la pondération.

4. Dispositif (100) selon l'une des revendications 1 à 3, qui présente par ailleurs un moyen (140) destiné à sortir l'image complète.

5. Dispositif (100) selon l'une des revendications 1 à 4, dans lequel le moyen (120) destiné à générer l'image complète est conçu pour rendre la pondération des données d'image d'un pixel dépendante de la position géométrique du pixel par rapport à la zone de recouvrement.

6. Dispositif (100) selon l'une des revendications 1 à 5, dans lequel le moyen (110) destiné à mémoriser est conçu pour mémoriser une information d'intensité dans les données d'image d'un pixel, et dans lequel le moyen (120) destiné à générer l'image complète est conçu pour générer l'intensité d'un pixel de l'image complète dans une zone de recouvrement selon une combinaison linéaire de l'information d'intensité des pixels des images partielles.

7. Dispositif (100) selon la revendication 6, dans lequel une intensité p (x, y) d'un pixel aux coordonnées x et y dans l'image complète résulte de

$$p(x, y) = \sum_{i=0}^{M} \sum_{k=0}^{n} \sum_{j=0}^{m} W_i(x + k, y + j) \cdot p_i(x + k, y + j)$$

avec

$$\sum_{i=0}^{M} \sum_{k=0}^{n} \sum_{j=0}^{m} W_i(x + k, y + j) = 1$$

où M est le nombre d'images partielles et de chaque image partielle sont chaque fois utilisés nxm pixels pour déterminer une intensité d'un pixel de l'image complète.

8. Dispositif (100) selon l'une des revendications 1 à 7, dans lequel le moyen (120) destiné à générer l'image complète est conçu pour effectuer la superposition des données d'image de pixels dans la zone de recouvrement.

9. Dispositif (100) selon l'une des revendications 7 ou 8, dans lequel le moyen (120) destiné à générer l'image complète est conçu pour rendre la pondération des données d'image d'un pixel d'une image partielle à un pixel dans l'image complète dépendante de sa distance par rapport à la limite de la zone de recouvrement.

10. Dispositif (100) selon l'une des revendications 1 à 9, dans lequel le moyen (120) destiné à générer l'image complète est conçu pour rendre les données d'image d'un pixel dans l'image complète dépendantes d'une pluralité de données d'image de pixels d'une image partielle.

11. Dispositif (100) selon l'une des revendications 1 à 10, dans lequel le moyen (110) destiné à mémoriser et le moyen (120) destiné à générer l'image complète sont conçus pour traiter les données d'image des images partielles qui présentent des données d'image radiographique.

12. Dispositif (100) selon la revendication 11, dans lequel les données d'image des images partielles présentent des données d'image radiographique de découpes du même objet.

13. Procédé de réduction d'artefacts de transition dans une image complète qui se compose d'images partielles dont les zones d'image présentent des zones de recouvrement, aux étapes suivantes consistant à :

mémoriser les données d'image des pixels des images partielles; et
générer l'image complète sur base des données d'image des images partielles en superposant les données d'image des pixels dans les zones de recouvrement selon une pondération,
dans lequel une fonction de pondération ($f_1$, $f_2$) est attribuée à chacune des zones partielles dans la zone de recouvrement,
**caractérisé par le fait que**
les fonctions de pondération ($f_1$, $f_2$) des images partielles sont modifiées, dans le cas d'un pixel défectueux dans l'une des images partielles à la position du pixel défectueux, de sorte que le pixel défectueux soit complètement caché et qu'il soit recouru uniquement à des pixels intacts des autres images partielles, de sorte qu'une influence d'un pixel détecté de manière défectueuse d'une image partielle qui provoquerait un artefact dans l'image complète soit réduite dans l'image complète, et
les fonctions de pondération ($f_1$, $f_2$) des images partielles sont adaptées en continu dans un environnement du pixel défectueux.

14. Programme d'ordinateur avec un code de programme pour la mise en oeuvre du procédé selon la revendication 13 lorsque le code de programme est exécuté sur un ordinateur.

FIG 1

FIG 2A

FIG 2B

FIG 3A

FIG 3B

FIG 3C

FIG 4

FIG 5

FIG 6

FIG 7A

FIG 7B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20040057633 A1

### In der Beschreibung aufgeführte Nicht-Patentliteratur

- **RICHARD SZELISKI.** Image Alignment and Stitching: A Tutorial. *Technical Report,* 26. Januar 2005

- Seamless Image Stitching in the Gradient Domain. **ANAT LEVIN.** ECCV 2004, LNCS. Springer-Verlag Berlin Heidelberg, 2004, vol. 3024, 377-389